# DEMANDE DE BREVET EUROPEEN

(11) **EP 4 381 932 A1**
(43) Date de publication de la demande: **12.06.2024**
(21) Numéro de dépôt: 23212944.5
(22) Date de dépôt: 29.11.2023
(51) Int. Cl.: A01D 34/86, A01D 46/28, A01G 17/02

(54) **DISPOSITIF DE COUPE POUR LA VÉGÉTATION**

(30) Priorité: 29.11.2022 FR 2212512
(71) Demandeur: Naotec, 17800 Pons (FR)
(72) Inventeur: VOUILLAT, REMY, 16360 BAIGNES SAINT RADEGONDE (FR); CHAUVEAU, STEPHANE, 17460 RETAUD (FR)
(74) Mandataire: Aquinov

(57) **Abrégé**

L'invention concerne un dispositif de coupe (1) pour la végétation comprenant un châssis (2) comprenant une base (3) sensiblement perpendiculaire au sens d'avancement du dispositif de coupe et équipée de moyens d'attache à l'avant d'un véhicule automobile et des moyens de fixation à au moins structure latérale (5) comprenant un bras de coupe supérieure (9) et deux bras de coupe sensiblement verticaux intérieur (10) et extérieur (11).

Selon l'invention, un système de repli de la structure latérale (5) permettant le passage d'une position de travail du dispositif de coupe (1) à une position repliée.

## Description

La présente invention concerne le domaine technique des dispositifs de coupe pour la végétation et plus particulièrement dans le domaine de la viticulture et/ou de l'arboriculture.

Dans le domaine ci-dessus, il est connu des dispositifs de coupe comprenant un châssis muni de moyen de fixation à l'avant ou à l'arrière d'un véhicule automobile de type tracteur ou d'une remorque. De tels dispositifs de coupe comprennent des structures latérales qui s'étendent de part de d'autre du châssis et portent des moyens de coupe, ledit dispositif étant destiné à avancer dans une allée entourée au moins en partie de végétation à couper.

De telles structures latérales s'étendent sensiblement perpendiculairement à la direction d'avancement du véhicule et sont donc encombrantes notamment sur les côtés du véhicule et présentent donc des inconvénients, par exemple pour le transport sur route.

Afin de palier à ces inconvénients, l'invention propose un système de repli d'au moins une structure latérale portant les bras de coupe.

L'invention concerne alors un dispositif de coupe pour la végétation comprenant un châssis comprenant une base sensiblement perpendiculaire au sens d'avancement du dispositif de coupe et équipée de moyens d'attache un véhicule automobile et des moyens de fixation à au moins une structure latérale, ladite structure latérale comprenant un bras de coupe supérieure et deux bras de coupe sensiblement verticaux intérieur et extérieur. Selon l'invention, le dispositif de coupe comprend également un système de repli de la structure latérale permettant le passage d'une position de travail du dispositif de coupe à une position repliée.

Les moyens d'attache du dispositif selon l'invention peuvent comprendre une remorque entre le dispositif de coupe et le véhicule automobile ou tout autre élément intermédiaire. Ainsi, la mise en oeuvre de deux positions, à savoir une position de travail mettant les bras de coupe dépliée pour une coupe effective et une position de repli permettant de réduire l'encombrement du dispositif de coupe pour faciliter notamment le transport et permettant ainsi de véhiculer le dispositif de coupe sur route.

Selon une caractéristique de l'invention, le système de repli se fait vers l'avant, le bras de coupe extérieur gardant la même orientation par rapport au sens d'avancement X. L'agencement du repli vers l'avant de la structure latérale permet d'éviter que les bras de coupe verticaux entrent en contact lors du repli.

De plus, le système de repli vers l'avant des bras de coupe permet au dispositif de coupe selon l'invention de garder un certain gabarit. Avantageusement, le repli vers l'avant permet de conformer le dispositif de coupe et lui permettre d'être transporter sur route.

Chaque bras de coupe intérieur et extérieur porte des moyens de coupe tels que des lames de coupe orientées sur une face d'un bras de coupe de manière à ce que les moyens de coupe extérieur font face aux moyens de coupe intérieur. Avantageusement, le système de repli se fait vers l'avant avec le bras de coupe extérieur gardant la même orientation par rapport au sens d'avancement X. Cela permet de disposer les bras de coupe extérieur et intérieur en vis-à-vis, et plus particulièrement les moyens de coupe extérieur font toujours face aux moyens de coupe intérieur. Ainsi, lors de la manoeuvre d'une position de travail à une position de repli, l'intégrité des moyens de coupe intérieur et extérieur porté est garantie et, en position repliée, chaque moyen de coupe porté par un bras de coupe est sécurisé de l'environnement extérieur.

Selon une caractéristique de l'invention, le système de repli de la structure latérale comprend une première liaison pivot apte à agir sur le repli du bras de coupe supérieur et une deuxième et troisième liaison pivot aptes à agir sur le repli du bras de coupe extérieur. La mise en oeuvre de tels pivots permet de replier les bras de coupe supérieur et extérieur vers l'avant du dispositif. Le bras de coupe intérieur reste fixe par rapport à la structure latérale lors du repli.

Selon une forme de réalisation de l'invention, le dispositif de coupe comprend deux structures latérales fixées à chaque extrémité d'une barre supérieure de la base, lesdites structures latérales étant symétriques par rapport à la base. La base présente notamment une forme sensiblement rectangulaire composée de barre de structure verticales et horizontales. Placer la liaison des structures latérales dans le prolongement de la barre supérieure de la base permet d'assurer la fonction de coupe des végétaux par le haut tout en gardant une forme simple structurante.

Selon une autre caractéristique de l'invention, les deuxième et troisième liaisons pivot sont reliées par un bras de liaison du châssis. Cette configuration permet de lier les deuxième et troisième liaisons pivot qui sont aptes à agir simultanément sur le bras de coupe extérieur pour permettre un repli vers l'avant, c'est-à-dire en maintenant une orientation parallèle à la direction X.

Selon une caractéristique de l'invention, le bras de coupe supérieur est sensiblement horizontal. Un tel bras de coupe sensiblement horizontal permet, d'une part de garantir une coupe horizontale supérieure de la végétation, et d'autre part, simplifie le système de repli en évitant un éventuel contact entre le bras de coupe supérieur et les bras de coupe verticaux lors du repli de la structure latérale.

Selon une caractéristique de l'invention, chaque système de repli comprend trois liaisons pivot, chaque liaison pivot étant actionnée par un vérin respectif. La mise en oeuvre de vérin permet, d'une part de contrôler la liaison pivot en limitant l'angle de rotation, et d'autre part, permet la mise en oeuvre d'une automatisation du système de repli.

Selon une forme de réalisation de l'invention, les vérins comprennent des actionneurs. Les actionneurs sont contrôlables à distance. L'un des principaux avantages de l'utilisation des actionneurs électriques est la précision de commande et de positionnement. Ceci permet une mise en oeuvre aisée à des coûts d'exploitation réduits.

Selon une forme de réalisation de l'invention, chaque bras de coupe comprend au moins deux lames de coupe. Les lames de coupe en rotation autour de leur axe propre permettent une coupe optimiser des végétaux.

Selon une caractéristique de l'invention, le dispositif comporte en outre un système d'écartement des bras de coupe verticaux comprenant un quatrième vérin agissant sur un tube glissière dans le bras de liaison du châssis apte à éloigner ou rapprocher le bras de coupe extérieur. La mise en oeuvre du système d'écartement des bras de coupe permet d'adapter le dispositif de coupe à la largeur des végétaux à couper, tels qu'une rangée de vigne.

L'invention concerne également un procédé de repli d'un dispositif de coupe selon l'invention comprenant les étapes suivantes, pour chacune des structures latérales :
- actionner simultanément le deuxième et le troisième vérin, et
- actionner le premier vérin.

Le procédé pour replier le dispositif de coupe se fait en deux temps. Un tel séquençage permet d'éviter un potentiel contact entre les bras de coupe supérieur et les bras de coupe verticaux.

L'invention concerne également un procédé de déploiement d'un dispositif de coupe selon l'invention comprenant les étapes suivantes, pour chacune des structures latérales :
- actionner le premier vérin, et
- actionner simultanément le deuxième et le troisième vérin.

Selon la forme de réalisation comprenant deux structures latérales, le repli ou le déploiement de chaque structure latérale se fait indépendamment. Les commandes peuvent également être synchronisées.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de réalisation d'un dispositif de coupe selon l'invention en position de travail,
[Fig.2] est une vue en perspective du dispositif de coupe de la figure 1 fixé à un attelage,
[Fig.3] est une vue en perspective du dispositif de coupe selon la figure 1 en position repliée,
[Fig.4] est une vue de l'arrière du dispositif de coupe de la figure 1 avec les bras de coupe non visibles,
[Fig.5] est un détail de la figure 1 montrant la première liaison pivot en position de travail,
[Fig.6] est un détail de la figure 3 montrant la première liaison pivot en position repliée,
[Fig.7] est un détail de la figure 1 montrant la deuxième et troisième liaisons pivot en position de travail, et
[Fig.8] est un détail de la figure 3 montrant la deuxième et troisième liaisons pivot en position repliée.

Il est à noter que sur ces figures les éléments structurels et/ou fonctionnels communs aux différentes variantes peuvent présenter les mêmes références.

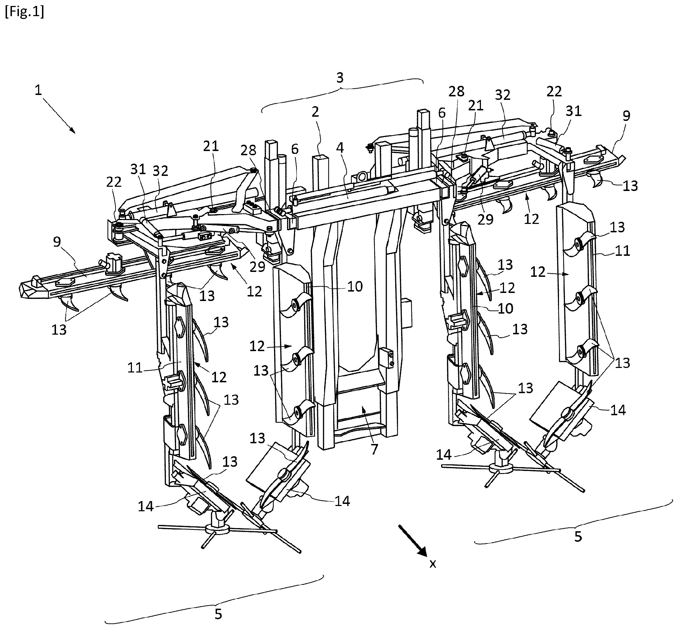

L'invention vise à réduire l'encombrement d'un dispositif de coupe pour végétaux lorsqu'il n'est pas en position de travail. A ces fins un dispositif de coupe désigné par la référence 1 tel qu'illustré à la figure 1 comprend un châssis 2 formé par un assemblage de barres ou tubes de structure et notamment une base 3 de forme sensiblement rectangulaire comprenant des barres verticales et une barre supérieure 4 horizontale.

Deux structures latérales 5 sont fixées à chaque extrémité de la barre supérieure 4 au moyen d'un support de fixation latéral 6. D'autres moyens de fixations des structures latérales 5 à la base 3 peuvent être mis en oeuvre dans le cadre de l'invention. Les deux structures latérales 5 sont dans le prolongement de part et d'autre de la base 3. Selon d'autres contraintes et d'autres formes de réalisation de l'invention, une structure latérale 5 peut être liée au châssis selon d'autres moyens de fixation.

Le dispositif de coupe 1 est destiné, en position de travail, à avancer selon la direction X dans une allée arborée de végétation à tailler. Pour ce faire, le dispositif de coupe 1 est apte à être attelé à l'avant d'un véhicule automobile tel qu'un tracteur.

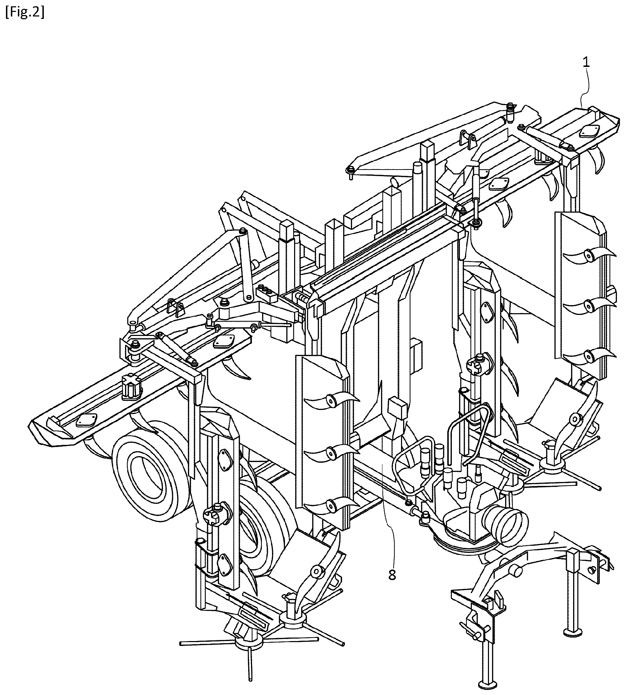

Pour former des moyens d'attache à un véhicule automobile, la base 3 du dispositif de coupe 1 comprend en partie basse une ouverture 7 permettant par exemple le passage et la fixation à un timon 8 représenté en figure 2. Cette forme de réalisation n'est pas limitative pour l'invention, d'autres type d'attelage et de moyens d'attache sont compatibles avec l'invention. Sur la figure 2, le dispositif de coupe 1 est ainsi fixé à une barre d'attelage de type timon 8 permettant de déplacer et guider le dispositif de coupe 1.

Le dispositif de coupe 1 comprend deux structures latérales 5 destinées à couper au moins en partie la végétation. A ces fins, les structures latérales 5 sont symétriques par rapport à la base 3. Chaque structure latérale 5 comprend un bras de coupe supérieur 9 et deux bras de coupe latéraux 10,11 sensiblement verticaux, un bras de coupe vertical intérieur 10 étant du côté de la base 3 et le bras de coupe vertical extérieur 11 étant le bras de coupe vertical le plus éloigné de la base 3. Les trois bras de coupe 9,10,11 sont aptes à entourer par exemple une haie ou une vigne (non représenté) et peuvent ainsi couper autour de celle-ci.

Le bras de coupe supérieur 9 comporte un support comprenant une surface intérieure 12. Les bras de coupe verticaux 10,11 comprennent une structure portante et un support comprenant une surface intérieure 12. Les surfaces intérieures 12 sont définie de manière à être dirigées vers la coupe et à cet effet portent des lames de coupe 13 en mouvement de rotation autour de leur axe propre. De telles lames de coupe 13 sont aptes à couper des végétaux. Selon la forme de réalisation illustrée, les bras de coupe 9,10,11 portent des lames de coupe 13 identiques. Le bras de coupe supérieur 9 comprend quatre lames de coupe 13 sur sa face intérieure 13. Les bras de coupe verticaux 10,11 comporte une partie principale et une extension 14 présentant un angle avec la partie principale permettant une coupe précise sur la partie basse des végétaux. Chacun des bras de coupe verticaux 10,11 portent également sur leur surface intérieure 12 quatre lames de coupe 13 dont une lame de coupe 13 située sur l'extension 14. Selon d'autres formes de réalisation non illustrées, les lames de coupe 13 peuvent être de type ou de dimension différentes selon l'usage voulu sur chacun des bras de coupes 9,10,11.

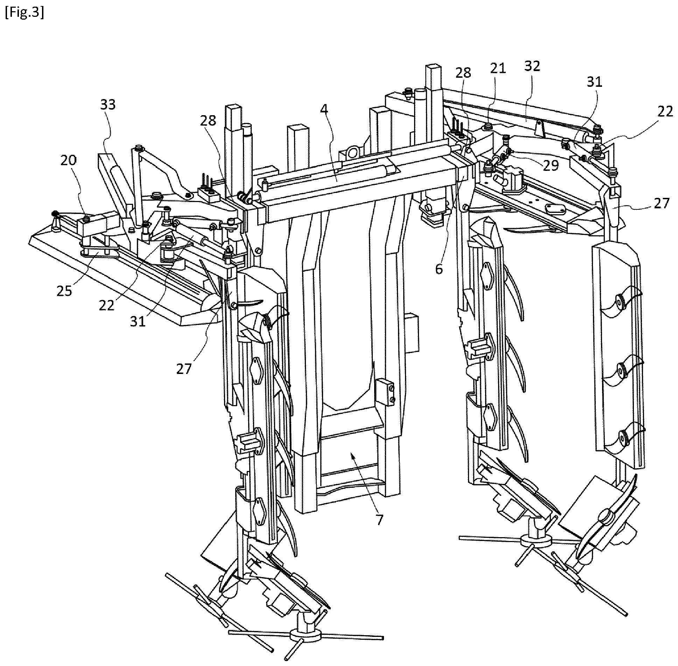

Afin de réduire l'encombrement du dispositif de coupe 1, celui-ci comprend un système de repli de chacune des structures latérales 5 permettant le passage d'une position de travail du dispositif de coupe 1 visible figure 1 à une position repliée telle que visible à la figure 3.

Selon l'invention, chaque structure latérale 5 comprend trois liaisons pivot 20,21,22 permettant le repli de chacun des bras de coupe 9,10,11. Les liaisons pivot 20,21,22 comprennent une vis traversant un tube de structure du châssis 2, chacune des liaisons pivot 20,21,22 comprend un axe de pivot sensiblement parallèle au sens vertical du dispositif 1 précédemment défini.

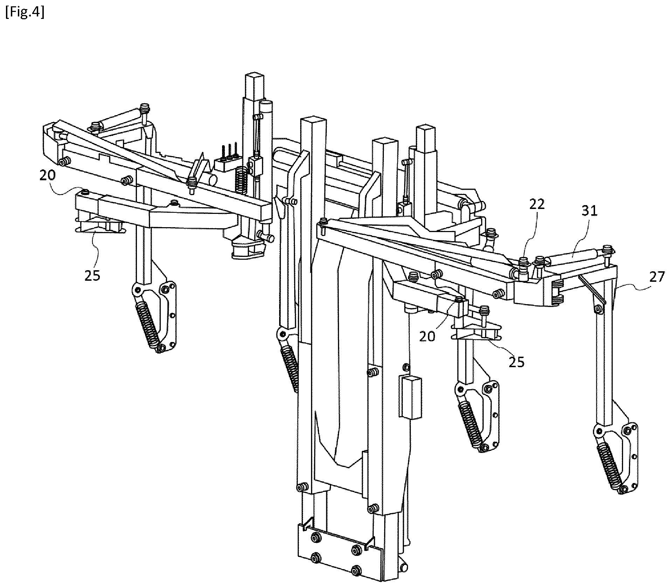

Une première liaison pivot 20 visible notamment selon la vue de l'arrière du dispositif de coupe 1 à la figure 4 permet un repli de sensiblement 90° par rapport à l'axe d'avancement X vers l'avant du bras de coupe supérieur 9.

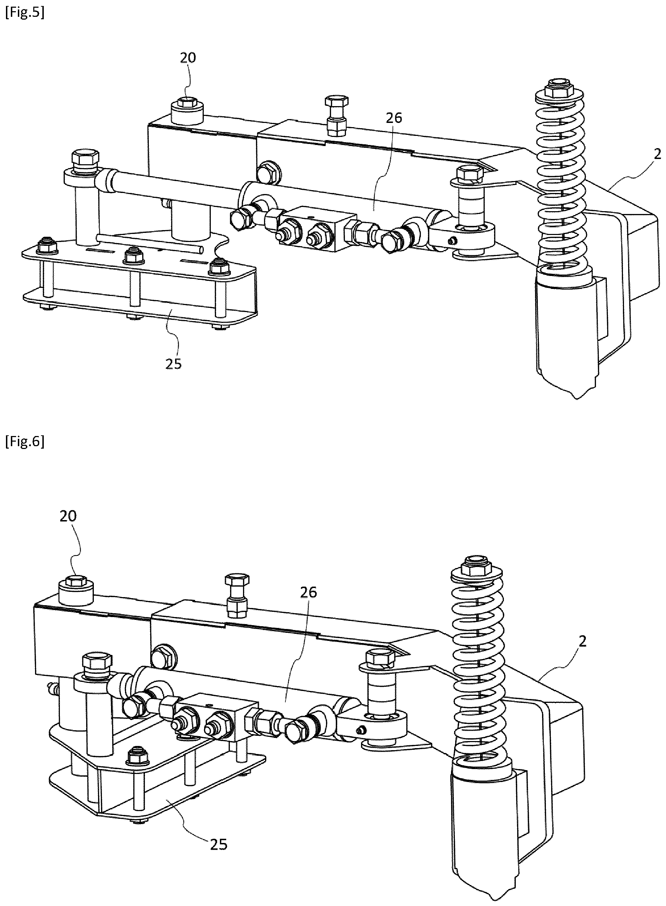

Les figures 5 et 6 correspondent à un détail de la structure latérale 5 gauche de la figure 1. Les figures 5 et 6 illustrent la partie du châssis 2 portant le bras de coupe supérieure 9 (non visible sur les figures 5 et 6). Le châssis 2 comprend un support de fixation haut 25 destiné au bras de coupe supérieur 9. Le support de fixation haut 25 s'articule sur le châssis 2 au moyen de la première liaison pivot 20 qui s'actionne grâce à un premier vérin 26. Le premier vérin 26 est dimensionné pour permettre une rotation d'un angle de 90° du support de fixation haut 25 par rapport au châssis 2 autour de l'axe propre défini par le premier pivot 20 telle que le montre la figure 6.

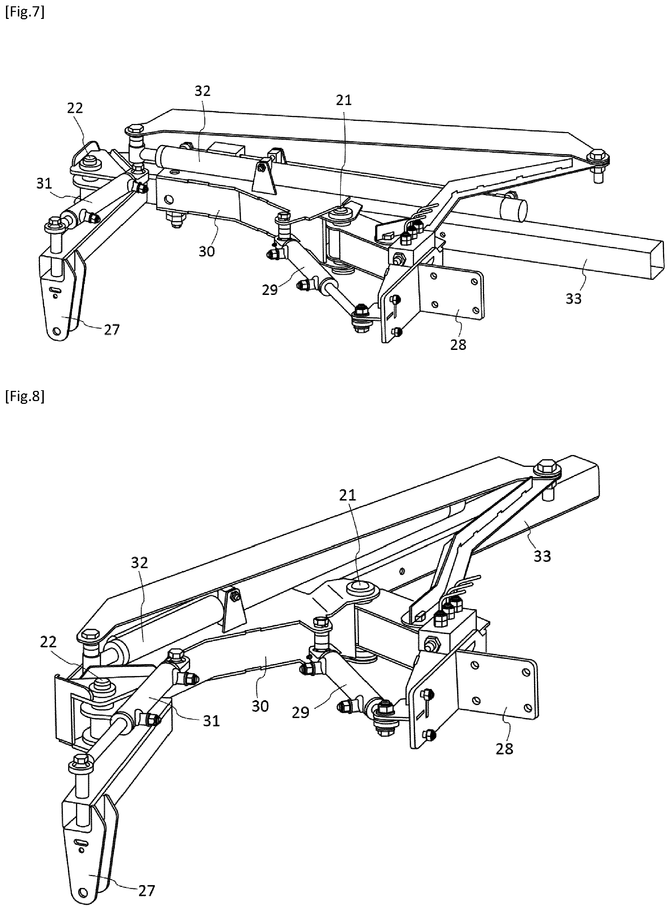

Les figures 7 et 8 correspondent à un détail de la structure latérale 5 gauche de la figure 1. Les figures 7 et 8 illustrent la partie du châssis 2 portant les bras de coupe latéraux 10,11 (non visibles sur les figures 7 et 8). Le châssis 2 comprend un premier support latéral 27 destiné à fixer le bras de coupe vertical extérieur 11. Le châssis 2 comprend également un deuxième support latéral 28 destiné à fixer le bras de coupe vertical intérieur 10.

Une deuxième liaison pivot 21 agit sur le premier support latéral 27. Un deuxième vérin 29 est relié d'une part au deuxième support 28 fixe sur le châssis 2 et, d'autre part, à un bras de liaison 30 du châssis 2 relié au deuxième pivot 21. Le deuxième vérin 29 est apte à actionner la deuxième liaison pivot 21 permettant ainsi le repli vers l'avant du bras de coupe vertical extérieur 11.

Une troisième liaison pivot 22 permet de garder la coupe dans le sens de l'avancement X, c'est-à-dire de maintenir l'orientation de la surface intérieure 12 du bras de coupe vertical extérieur 11 parallèle à la direction X. Pour ce faire, un troisième vérin 31 est apte à agir sur la troisième liaison pivot 22 et le troisième vérin 31 est également relié au bras de liaison 30 du châssis 2 et donc à la deuxième liaison pivot 21. Ainsi, le bras de coupe extérieur 11 est apte à se rabattre vers l'avant en maintenant son orientation.

La structure latérale 5 droite visible à la figure 1 porte les mêmes éléments de la structure latérale 5 gauche tels que décrits ci-dessus, lesdits éléments étant en symétrie par rapport à la base 3.

Selon la forme de réalisation illustrée, le châssis 2 comprend également un quatrième vérin 32 destiné à agir sur un tube glissière 33 permettant de régler l'écartement entre les deux bras de coupe verticaux 10,11.

La base 3 comprend également au niveau de la barre supérieur 4 un système de vérin permettant d'allonger sa longueur. Le support de fixation latéral 6 a alors un mouvement de translation possible selon une direction perpendiculaire à X permettant ainsi d'adapter la distance entre la base 3 et le bras de coupe intérieur 10. Cette configuration permet également d'adapter l'écartement entre les deux structures latérales 5.

Pour replier un dispositif de coupe 1 selon l'invention qui est en position de travail, selon une première étape du procédé de repli, le deuxième vérin 29 et troisième vérin 31 d'une structure latérale 5 sont actionnés simultanément dans un premier temps. Le bras de coupe extérieur 11 a alors un mouvement de repli vers l'avant, sa face intérieure 12 restant parallèle à la direction X.

Il est à noter que sur les figures de l'exemple de réalisation, des flexibles provenant d'un moyen moteur tel qu'une pompe hydraulique et destinés à commander les vérins 26,29,31 ne sont pas représentés. Les moyens de commande des lames de coupe 13 ne sont pas non plus représentés sur les figures.

Selon une deuxième étape du procédé, le premier vérin 26 est actionné. Le bras de coupe supérieur 9 est alors replié vers l'avant.

Pour déplier un dispositif de coupe 1 selon l'invention, c'est-à-dire pour passer d'une position repliée à une position de travail, selon une première étape du procédé de déploiement, le premier vérin 26 de chaque structure latérale 5 est actionné de façon à déplier chaque bras de coupe supérieure 9 les plaçant ainsi sensiblement perpendiculaire à la direction X.

Selon une deuxième étape du procédé de déploiement, le deuxième vérin 29 et troisième vérin 31 de chaque structure latérale 5 sont actionnés simultanément dans un deuxième temps. Chaque bras de coupe extérieure 11 a alors un mouvement de rotation tout en maintenant leur face intérieure 12 respective parallèle à la direction X.

Bien entendu, diverses autres modifications peuvent être apportées à l'invention dans le cadre des revendications annexées.

## Revendications

1. Dispositif de coupe (1) pour la végétation comprenant un châssis (2) comprenant une base (3) sensiblement perpendiculaire au sens d'avancement du dispositif de coupe et équipée de moyens d'attache à un véhicule automobile et des moyens de fixation à au moins une structure latérale (5), ladite structure latérale comprenant un bras de coupe supérieure (9) et deux bras de coupe sensiblement verticaux intérieur (10) et extérieur (11), **caractérisé en ce que** le dispositif (1) comprend un système de repli de la structure latérale (5) permettant le passage d'une position de travail du dispositif de coupe (1) à une position repliée.

2. Dispositif de coupe (1) selon la revendication précédente dans lequel le système de repli se fait vers l'avant, le bras de coupe extérieur (11) gardant la même orientation par rapport au sens d'avancement X.

3. Dispositif de coupe (1) selon l'une des revendications précédentes dans lequel le système de repli de la structure latérale (5) comprend une première liaison pivot (20) apte à agir sur le repli du bras de coupe supérieur (9) et une deuxième (21) et troisième (22) liaison pivot aptes à agir sur le repli du bras de coupe extérieur (11).

4. Dispositif de coupe selon l'une des revendications précédentes comprenant deux structures latérales (5) fixées à chaque extrémité d'une barre supérieure (4) de la base (3), lesdites structures latérales (5) étant symétriques par rapport à la base (3).

5. Dispositif de coupe selon l'une des revendications précédentes dans lequel le bras de coupe supérieur (9) est sensiblement horizontal.

6. Dispositif de coupe (1) selon la revendication précédente dans son rattachement aux revendications 3 ou 4, dans lequel les deuxième et troisième liaisons pivot (21,22) sont reliées par un bras de liaison (30) du châssis (2).

7. Dispositif de coupe (1) selon l'une des revendications précédentes dans lequel chaque système de repli comprend trois liaisons pivot (20,21,22), chaque liaison pivot (20,21,22) étant actionnée par un vérin (26,29,31) respectif.

8. Dispositif de coupe (1) selon la revendication précédente dans lequel les vérins (26,29,31) comprennent des actionneurs.

9. Dispositif de coupe (1) selon l'une des revendications précédentes dans lequel chaque bras de coupe (9,10,11) comprend au moins deux lames de coupe (13).

10. Dispositif de coupe (1) selon l'une des revendications 7 ou 8 dans sa dépendance à la revendication 7 ou 9 dans sa dépendance à la revendication 7 comportant en outre un système d'écartement des bras de coupe verticaux (10,11) comprenant un quatrième vérin (32) agissant sur un tube glissière (33) dans le bras de liaison (30) du châssis (2) apte à éloigner ou rapprocher le bras de coupe extérieur (11).

11. Procédé de repli d'un dispositif de coupe (1) selon l'une des revendications 6 à 10 comprenant les étapes suivantes, pour chacune des structures latérales (5) :
- actionner simultanément le deuxième vérin (29) et le troisième vérin (31), et
- actionner le premier vérin (26) .

12. Procédé de déploiement d'un dispositif de coupe (1) selon l'une des revendications 6 à 10 comprenant les étapes suivantes, pour chacune des structures latérales (5) :
- actionner le premier vérin (26), et
- actionner simultanément le deuxième vérin (29) et le troisième vérin (31).
